# EUROPÄISCHE PATENTANMELDUNG

(11) **EP 3 079 237 A1**
(43) Veröffentlichungstag der Anmeldung: **12.10.2016**
(21) Anmeldenummer: 15162805.4
(22) Anmeldetag: 08.04.2015
(51) Int. Cl.: H02K 5/04, H02K 5/22, H02K 5/26, H02K 5/10, G12B 9/02, G01P 1/02, G01D 11/24

(54) **GEHÄUSE FÜR EINEN MESSWERTGEBER ODER EINE ELEKTRISCHE MASCHINE**

(71) Anmelder: Siemens Aktiengesellschaft, 80333 München (DE)
(72) Erfinder: Pannier, Lars, 97618 Rödelmaier (DE)

(57) **Zusammenfassung**

Die Erfindung betrifft ein Gehäuse (3) für einen Messwertgeber oder eine elektrische Maschine (1). Das Gehäuse (3) umfasst zwei Gehäuseteile (5, 7) mit jeweils einer ringförmig verlaufenden Anlageoberfläche (19, 21). Dabei sind die Gehäuseteile (5, 7) relativ zueinander um eine Rotationsachse (17) drehbar gelagert und die Gehäuseteile (5, 7) und Anlageoberflächen (19, 21) sind derart ausgebildet, dass die Anlageoberflächen (19, 21) in mehreren durch relative Drehungen der Gehäuseteile (5, 7) einstellbaren Verbindungsstellungen der Gehäuseteile (5, 7) lückenlos aneinander anliegen. Wenigstens eines der beiden Gehäuseteile (5, 7) weist eine Gehäuseöffnung zur Durchführung wenigstens eines Abgangskabels (11) oder eine Steckerbuchse (23) für einen Stecker (9) eines Abgangskabels (11) auf.

## Beschreibung

Die Erfindung betrifft ein Gehäuse für einen Messwertgeber oder eine elektrische Maschine sowie eine elektrische Maschine mit einem derartigen Gehäuse.

Aus Gehäusen elektrischer Maschinen werden Abgangskabel, insbesondere Signal- und/oder Leistungskabel, herausgeführt. Dazu weisen die Gehäuse üblicherweise wenigstens eine Gehäuseöffnung zur Durchführung wenigstens eines Abgangskabels oder/und wenigstens eine Steckerbuchse für einen Stecker eines Abgangskabels auf. Um die Abgangsrichtung eines Abgangskabels einzustellen, wird der Stecker des Abgangskabels gedreht und/oder das Abgangskabel gebogen. Dabei darf allerdings eine maximal zulässige Biegung des Abgangskabels nicht überschritten werden. Dies führt oft zu einem erhöhten Platzbedarf und wirkt sich insbesondere nachteilig bei engen Einbauräumen für elektrische Maschinen aus, z. B. beim Einbau von Motoren in Fertigungs- und Produktionsmaschinen.

Der Erfindung liegt die Aufgabe zugrunde, ein insbesondere hinsichtlich der Führung von Abgangskabeln verbessertes Gehäuse für einen Messwertgeber oder eine elektrische Maschine sowie eine diesbezüglich verbesserte elektrische Maschine anzugeben.

Die Aufgabe wird erfindungsgemäß hinsichtlich des Gehäuses durch die Merkmale des Anspruchs 1 und hinsichtlich der elektrischen Maschine durch die Merkmale des Anspruchs 13 gelöst.

Vorteilhafte Ausgestaltungen der Erfindung sind Gegenstand der Unteransprüche.

Ein erfindungsgemäßes Gehäuse für einen Messwertgeber oder eine elektrische Maschine umfasst zwei Gehäuseteile mit jeweils einer ringförmig verlaufenden Anlageoberfläche. Dabei sind die Gehäuseteile relativ zueinander um eine Rotationsachse drehbar gelagert und die Gehäuseteile und Anlageoberflächen sind derart ausgebildet, dass die Anlageoberflächen in mehreren durch relative Drehungen der Gehäuseteile einstellbaren Verbindungsstellungen der Gehäuseteile lückenlos aneinander anliegen. Wenigstens eines der beiden Gehäuseteile weist eine Gehäuseöffnung zur Durchführung wenigstens eines Abgangskabels oder eine Steckerbuchse für einen Stecker eines Abgangskabels auf.

Die Erfindung ermöglicht eine flexible Einstellung der Abgangsrichtung für Abgangskabel des Gehäuses durch die Drehbarkeit der Gehäuseteile relativ zueinander. Insbesondere ermöglicht die Erfindung dadurch vorteilhaft einen größeren Einstellbereich für die Abgangsrichtung als ein Einstellbereich, der durch Drehung der Stecker und/oder Biegung der Abgangskabel verfügbar ist. Ferner kann dies vorteilhaft zu einem reduzierten Platzbedarf für die Kabel und Stecker durch eine geeignete Führung der Abgangskabel führen.

Eine Ausgestaltung der Erfindung sieht vor, dass die Anlageoberflächen zueinander korrespondierende Höhenprofile aufweisen, die jeweils eine Rotationssymmetrie unter den Verbindungsstellungen der Gehäuseteile entsprechenden Rotationen um die Rotationsachse aufweisen. Beispielsweise ist das Höhenprofil jeder Anlageoberfläche dabei wellenförmig und entlang des ringförmigen Verlaufs der Anlageoberfläche periodisch mit einer Periodenanzahl, die mit der Anzahl der verschiedenen Verbindungsstellungen der Gehäuseteile übereinstimmt, ausgebildet.

Die vorgenannten Ausgestaltungen ermöglichen vorteilhaft, die Verbindungsstellungen der Gehäuseteile durch Höhenprofile der Anlageoberflächen zu definieren.

Eine weitere Ausgestaltung der Erfindung sieht eine elastische Verbindung der beiden Gehäuseteile vor, die einer Trennung der beiden Anlageoberflächen in jeder Verbindungsstellung der Gehäuseteile entgegenwirkt.

Dadurch können die Verbindungsstellungen der Gehäuseteile vorteilhaft gesichert werden, ohne die relative Drehbarkeit der Gehäuseteile aufzugeben.

Vorzugsweise weist dabei jeder Gehäuseteil wenigstens eine Stützfläche auf, die in den Verbindungsstellungen der Gehäuseteile wenigstens annährend senkrecht zur Rotationsachse ist und einer Stützfläche des jeweils anderen Gehäuseteils entlang einer Parallelen zur Rotationsachse gegenüberliegt, und die elastische Verbindung übt in jeder Verbindungsstellung der Gehäuseteile eine einer Trennung der beiden Anlageoberflächen entgegenwirkende Kraft zwischen einer ersten Stützfläche eines Gehäuseteils und einer zweiten Stützfläche des anderen Gehäuseteils aus.

Vorzugsweise weist die elastische Verbindung dabei ferner wenigstens ein elastisches Verbindungselement, beispielsweise einen Federring, auf, das derart angeordnet und ausgebildet ist, dass es in jeder Verbindungsstellung der Gehäuseteile zwischen einer ersten Stützfläche und einer zweiten Stützfläche angeordnet ist und einer Trennung der beiden Anlageoberflächen entgegenwirkt.

Des Weiteren weist vorzugsweise ein Gehäuseteil einen um die Rotationsachse verlaufenden Stützkragen auf, dessen Oberfläche eine erste Stützfläche definiert.

Die vorgenannten Weitergestaltungen der Erfindung ermöglichen vorteilhaft einfach und kostengünstig realisierbare elastische Verbindungen der beiden Gehäuseteile, die einer Trennung der beiden Anlageoberflächen in den Verbindungsstellungen der Gehäuseteile entgegenwirken.

In dem Falle, dass ein Gehäuseteil einen Stützkragen aufweist, weist der andere Gehäuseteil ferner vorzugsweise mehrere Schnapphaken auf, die sich in jeder Verbindungsstellung der Gehäuseteile jeweils wenigstens annähernd parallel zur Rotationsachse über den Stützkragen erstrecken und jeweils ein Schnapphakenende aufweisen, das eine der ersten Stützfläche des Stützkragens zugewandte zweite Stützfläche aufweist, wobei jeder Schnapphaken derart ausgebildet ist, dass das Schnapphakenende über den Stützkragen schiebbar ist.

Derartige Schnapphaken ermöglichen vorteilhaft einen einfachen und kostengünstigen Zusammenbau der beiden Gehäuseteile zu dem Gehäuse durch ein Einrasten von Schnapphaken.

Eine weitere Ausgestaltung der Erfindung sieht eine Dichtung vor, die in jeder Verbindungsstellung der Gehäuseteile die Verbindung der beiden Gehäuseteile gegeneinander abdichtet. Beispielsweise umfasst die Dichtung dabei wenigstens einen O-Ring, der in einer O-Ring-Nut eines Gehäuseteils angeordnet ist, so dass er in jeder Verbindungsstellung der Gehäuseteile um die Rotationsachse herum verläuft und an beiden Gehäuseteilen anliegt.

Dadurch wird das Gehäuse vorteilhaft gegen das Eindringen von Material gesichert.

Eine erfindungsgemäße elektrische Maschine weist ein erfindungsgemäßes Gehäuse auf, wobei ein erster Gehäuseteil des Gehäuses räumlich fixiert ist und der zweite Gehäuseteil eine Gehäuseöffnung zur Durchführung wenigstens eines Abgangskabels oder eine Steckerbuchse für einen Stecker eines Abgangskabels aufweist.

Beispielsweise ist das Gehäuse dabei ein Gehäuse eines Aktivteils der elektrischen Maschine. Alternativ ist das Gehäuse ein Gehäuse eines Messwertgebers, wobei der erste Gehäuseteil fest an einem Maschinengehäuse der elektrischen Maschine, insbesondere an einem Lagerschild des Maschinengehäuses, angeordnet ist.

Dies ermöglicht die oben bereits genannte vorteilhafte flexible Einstellbarkeit der Abgangsrichtung von Abgangskabeln eines Gehäuses einer elektrischen Maschine.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch eine Seitenansicht einer elektrischen Maschine mit einem aus zwei Gehäuseteilen bestehenden Gehäuse eines Messwertgebers und einen Stecker eines Abgangskabels in einer ersten Steckposition des Steckers,
- FIG 2: schematisch eine Seitenansicht der in Figur 1 dargestellten elektrischen Maschine mit dem Stecker des Abgangskabels in einer zweiten Steckposition,
- FIG 3: in eine Ebene abgewickelte Höhenprofile zweier Anlageoberflächen zweier Gehäuseteile eines Gehäuses,
- FIG 4: schematisch die in Figur 2 dargestellte elektrische Maschine in einer ersten Verbindungsstellung der Gehäuseteile in einer Sicht auf ein Ende des Gehäuses,
- FIG 5: schematisch die in Figur 2 dargestellte elektrische Maschine in einer zweiten Verbindungsstellung der Gehäuseteile in einer Sicht auf ein Ende des Gehäuses,
- FIG 6: schematisch die in Figur 2 dargestellte elektrische Maschine in einer dritten Verbindungsstellung der Gehäuseteile in einer Sicht auf ein Ende des Gehäuses,
- FIG 7: schematisch die in Figur 2 dargestellte elektrische Maschine in einer vierten Verbindungsstellung der Gehäuseteile in einer Sicht auf ein Ende des Gehäuses,
- FIG 8: schematisch die in Figur 2 dargestellte elektrische Maschine in einer fünften Verbindungsstellung der Gehäuseteile in einer Sicht auf ein Ende des Gehäuses,
- FIG 9: schematisch die in Figur 2 dargestellte elektrische Maschine in einer sechsten Verbindungsstellung der Gehäuseteile in einer Sicht auf ein Ende des Gehäuses,
- FIG 10: schematisch die in Figur 2 dargestellte elektrische Maschine in einer siebten Verbindungsstellung der Gehäuseteile in einer Sicht auf ein Ende des Gehäuses,
- FIG 11: schematisch die in Figur 2 dargestellte elektrische Maschine in einer achten Verbindungsstellung der Gehäuseteile in einer Sicht auf ein Ende des Gehäuses,
- FIG 12: einen Ausschnitt einer Schnittdarstellung eines Gehäuses eines Messwertgebers,
- FIG 13: eine perspektivische Darstellung eines ersten Gehäuseteils eines Gehäuses eines Messwertgebers,
- FIG 14: einen Ausschnitt einer Schnittdarstellung zweier Gehäuseteile eines Gehäuses eines Messwertgebers in einem ersten axialen Abstand voneinander,
- FIG 15: einen Ausschnitt einer Schnittdarstellung zweier Gehäuseteile eines Gehäuses eines Messwertgebers in einem zweiten axialen Abstand voneinander, und
- FIG 16: einen Ausschnitt einer Schnittdarstellung zweier Gehäuseteile eines Gehäuses eines Messwertgebers in einem dritten axialen Abstand voneinander.

Einander entsprechende Teile sind in allen Figuren mit den gleichen Bezugszeichen versehen.

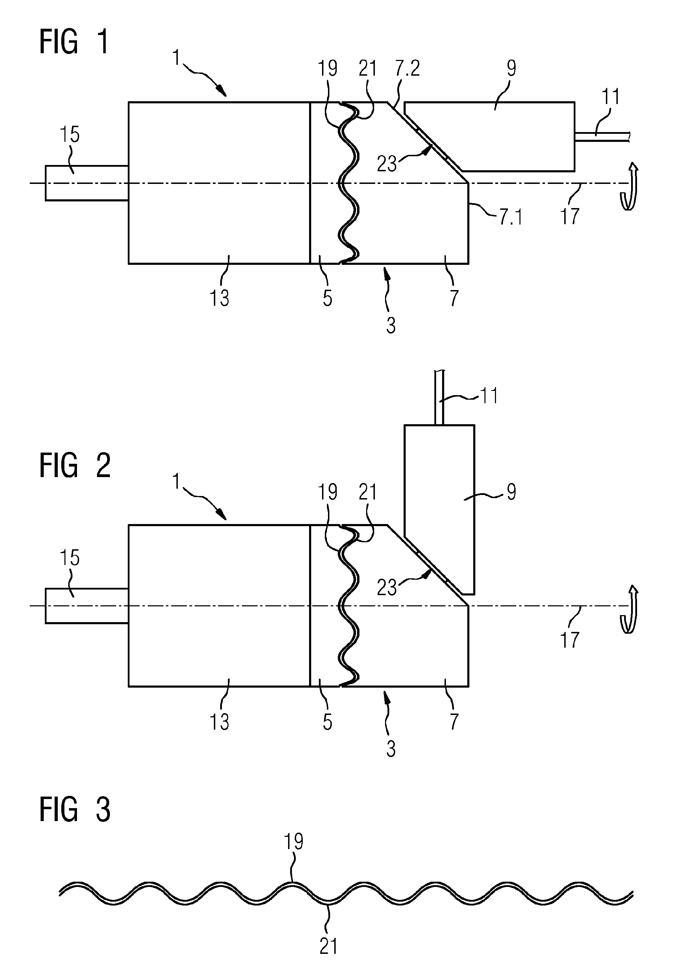

Die Figuren 1 und 2 zeigen jeweils schematisch eine Seitenansicht einer elektrischen Maschine 1 mit einem Gehäuse 3 eines Messwertgebers, das aus zwei Gehäuseteilen 5, 7 besteht, und einen Stecker 9 eines Abgangskabels 11 in zwei verschiedenen Steckpositionen des Steckers 9.

Die elektrische Maschine 1 ist beispielsweise als ein Motor ausgebildet und umfasst neben dem Gehäuse 3 ein Maschinengehäuse 13, in dem ein Rotor und ein Stator der elektrischen Maschine 1 angeordnet sind und aus dem eine Rotorwelle 15 des Rotors herausgeführt ist.

Die Gehäuseteile 5,7 des Gehäuses 3 sind relativ zueinander um eine Rotationsachse 17, die eine axiale Richtung definiert, drehbar gelagert und weisen zwei zueinander korrespondierende, jeweils ringförmig verlaufende Anlageoberflächen 19, 21 auf, die zum Zusammenfügen der Gehäuseteile 5,7 aneinander anlegbar sind. Dabei ist eine erste Anlageoberfläche 19 eine Teiloberfläche eines ersten Gehäuseteils 5 und die zweite Anlageoberfläche 21 ist eine Teiloberfläche des zweiten Gehäuseteils 7. Die Anlageoberflächen 19, 21 weisen jeweils Höhenprofile auf, die wellenförmig und entlang des ringförmigen Verlaufs der jeweiligen Anlageoberfläche 19, 21 periodisch verlaufen.

Die Gehäuseteile 5,7 und Anlageoberflächen 19, 21 sind derart ausgebildet, dass die Anlageoberflächen 19, 21 in durch relative Drehungen der Gehäuseteile 5, 7 einstellbaren Verbindungsstellungen der Gehäuseteile 5, 7, deren Anzahl durch die Periodenanzahl der Höhenprofile bei einem Umlauf um die Rotationsachse 17 bestimmt ist, lückenlos aneinander anliegen.

Figur 3 zeigt in eine Ebene abgewickelte derartige periodisch verlaufende Höhenprofile zweier Anlageoberflächen 19, 21 mit der Periodenanzahl Acht.

Ein erster Gehäuseteil 5 ist fest an dem Maschinengehäuse 13 der elektrischen Maschine 1, beispielsweise an einem Lagerschild des Maschinengehäuses 13, angeordnet. Der zweite Gehäuseteil 7 weist eine Steckerbuchse 23 für den Stecker 9 des Abgangskabels 11 auf. Ferner ist der zweite Gehäuseteil 7 topfartig ausgebildet, wobei die zweite Anlageoberfläche 21 den Topfrand bildet und die Außenoberfläche des zweiten Gehäuseteils 7 einen Bodenbereich 7.1, der senkrecht zur Rotationsachse 17 ist, und einen sich an den Bodenbereich 7.1 anschließenden Seitenbereich 7.2, in dem die Steckerbuchse 23 angeordnet ist und der Flächennormalen aufweist, die einen Winkel von etwa 45 Grad mit der Rotationsachse 17 bilden, umfasst.

Der Stecker 9 und die Steckerbuchse 23 sind derart ausgebildet, dass der Stecker 9 in zwei verschiedenen Steckpositionen in die Steckerbuchse 23 einführbar ist, in denen das Abgangskabel 11 in voneinander verschiedenen Abgangsrichtungen von dem Stecker 9 abgeht, die einen Winkel von etwa 90 Grad zueinander bilden. Figur 1 zeigt den Stecker 9 in einer ersten dieser beiden Steckpositionen, in der das Abgangskabel 11 parallel zur Rotationsachse 17 aus dem Stecker 9 abgeht, Figur 2 zeigt den Stecker 9 in der zweiten Steckposition, in der das Abgangskabel 11 senkrecht zu der Rotationsachse 17 aus dem Stecker 9 abgeht.

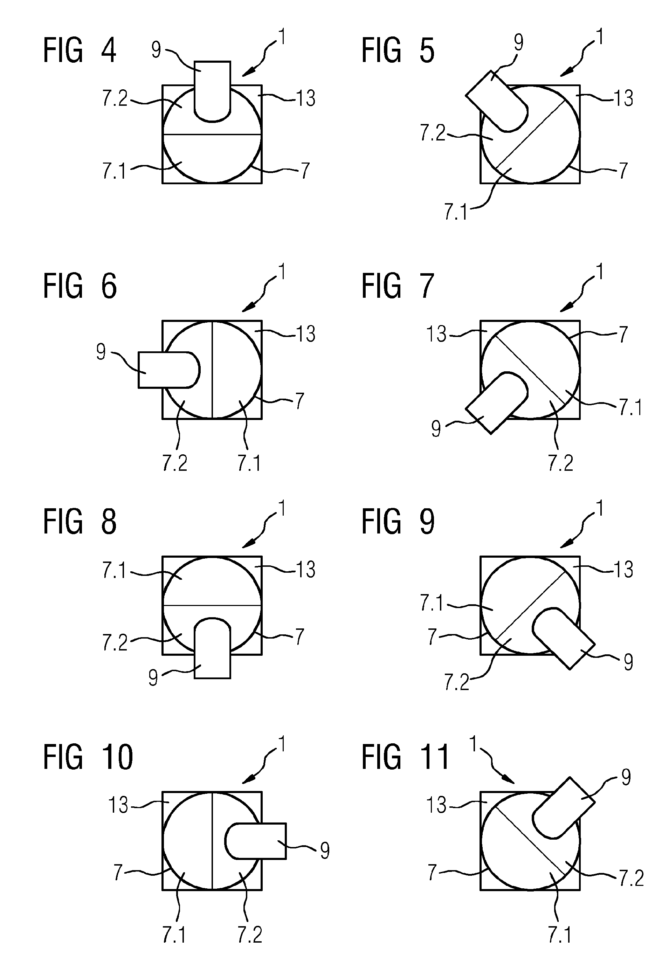

Die Figuren 4 bis 11 zeigen schematisch eine in den Figuren 1 und 2 dargestellte elektrische Maschine 1 in einer Sicht auf ein Ende des Gehäuses 3 in jeweils verschiedenen Verbindungsstellungen der Gehäuseteile 5, 7, wobei sich der Stecker 9 jeweils in der in Figur 2 dargestellten Steckposition befindet und die Höhenprofile der Anlageoberflächen 19, 21 wie in Figur 3 periodisch mit einer Periodenanzahl Acht ausgebildet sind. Dabei ist die elektrische Maschine 1 in den Figuren 4 bis 11 in jeweils einer der dabei möglichen Verbindungsstellungen der Gehäuseteile 5, 7 dargestellt.

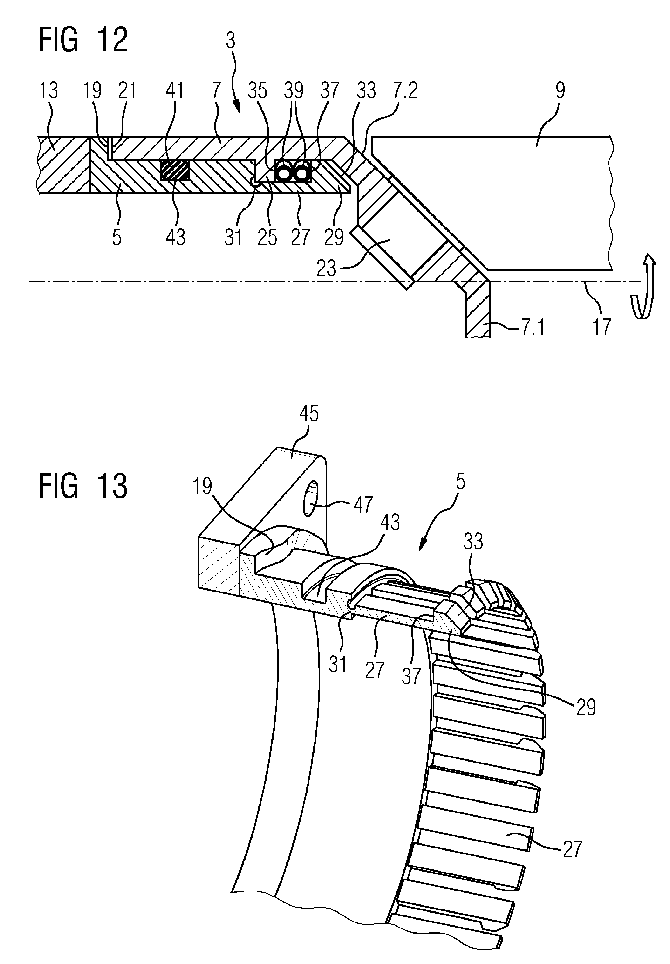

Figur 12 zeigt einen Ausschnitt einer Schnittdarstellung eines Gehäuses 3 eines Messwertgebers, das aus zwei relativ zueinander um eine Rotationsachse 17 drehbaren Gehäuseteilen 5, 7 besteht.

Wie in den Figuren 1 und 2 ist ein erster Gehäuseteil 5 fest an einem Maschinengehäuse 13 einer elektrischen Maschine 1 angeordnet und weist eine erste Anlageoberfläche 19 auf und der zweite Gehäuseteil 7 weist eine zu der ersten Anlageoberfläche 19 korrespondierende zweite Anlageoberfläche 21 und eine Steckerbuchse 23, in die ein Stecker 9 wie in der in Figur 1 gezeigten Steckposition gesteckt ist, auf.

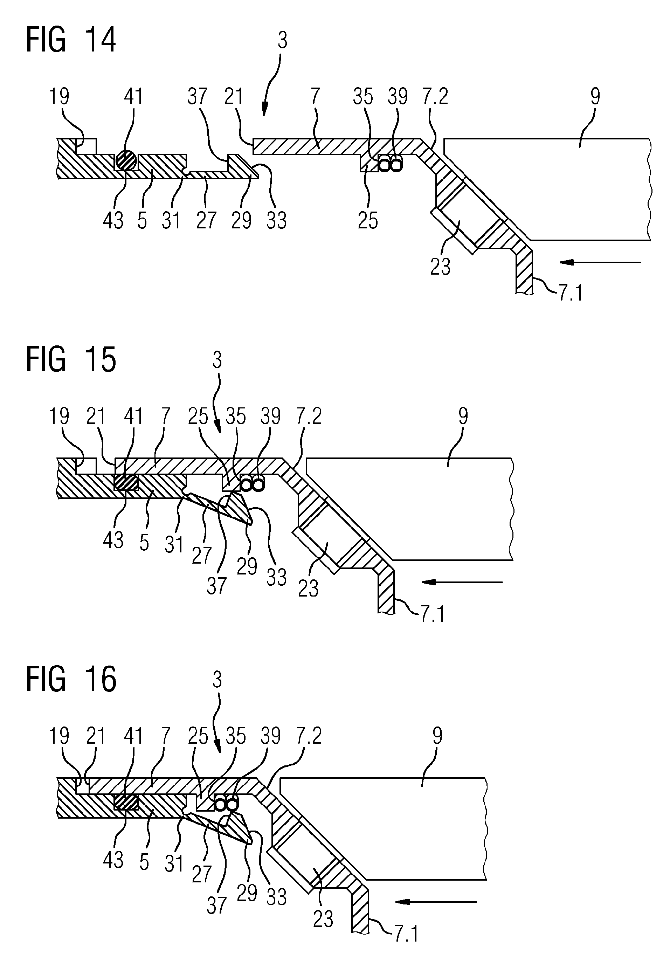

Der zweite Gehäuseteil 5 weist einen von seiner Innenoberfläche abstehenden Stützkragen 25 auf, der ringartig um die Rotationsachse 17 verläuft. Der erste Gehäuseteil 5 weist mehrere Schnapphaken 27 auf, die sich in jeder Verbindungsstellung der Gehäuseteile 5, 7 jeweils wenigstens annähernd parallel zur Rotationsachse 17 über den Stützkragen 25 erstrecken und jeweils ein Schnapphakenende 29 aufweisen, das über den Stützkragen 25 schiebbar ist (siehe dazu auch die Figuren 14 bis 16). Damit die Schnapphakenenden 29 jeweils über den Stützkragen 25 schiebbar sind, weist jeder Schnapphaken 27 eine Schmalstelle 31 und eine abgeschrägte Frontfläche 33 auf. An der Schmalstelle 31 ist die Dicke des Schnapphakens 27 reduziert, so dass der Schnapphaken 27 an der Schmalstelle 31 elastisch biegbar ist und sich das Schnapphakenende 29 axial über den Stützkragen 25 schieben lässt, wobei die abgeschrägte Frontfläche 33 wie ein Rampe wirkt, entlang derer das Schnapphakenende 29 an dem Stützkragen 25 gleitet.

In jeder Verbindungsstellung der Gehäuseteile 5, 7 ist jedes Schnapphakenende 29 von dem Stützkragen 25 beabstandet, wobei sich eine zur Rotationsachse 17 senkrechte erste Stützfläche 35 des Stützkragens 25 und eine zur ersten Stützfläche 35 parallele zweite Stützfläche 37 des Schnapphakenendes 29 axial gegenüberliegen. Zwischen der ersten Stützfläche 35 des Stützkragens 25 und den zweiten Stützflächen 37 der Schnapphakenenden 29 verläuft ein elastisches Verbindungselement 39, das als ein ringartig um die Rotationsachse 17 verlaufender Federring ausgebildet ist, der eine einer Trennung der beiden Anlageoberflächen 5, 7 entgegenwirkende Kraft zwischen der ersten Stützfläche 35 und den zweiten Stützflächen 37 ausübt und dadurch die beiden Gehäuseteile 5, 7 in deren Verbindungsstellungen aneinanderdrückt.

Ferner weist das Gehäuse 3 eine Dichtung 41 auf, die in jeder Verbindungsstellung der Gehäuseteile 5, 7 die Verbindung der beiden Gehäuseteile 5, 7 gegeneinander abdichtet. Die Dichtung 41 ist als ein O-Ring ausgebildet, der in einer zu dem zweiten Gehäuseteil 7 geöffneten O-Ring-Nut 43 des ersten Gehäuseteils 5 angeordnet ist und in jeder Verbindungsstellung der Gehäuseteile 5, 7 um die Rotationsachse 17 herum verläuft und an beiden Gehäuseteilen 5, 7 dicht anliegt.

Figur 13 zeigt eine perspektivische Darstellung eines ersten Gehäuseteils 5, das einen Flansch 45 mit Flanschlöchern 47 zur Befestigung des ersten Gehäuseteils 5 an dem Maschinengehäuse 13 aufweist und sonst analog zu dem in Figur 12 dargestellten ersten Gehäuseteil 5 ausgebildet ist.

Die Figuren 14 bis 16 zeigen den Zusammenbau des in Figur 12 dargestellten Gehäuses 3 in zu Figur 12 analogen Darstellungen. Dabei wird der zweite Gehäuseteil 7 axial entlang einer durch einen Pfeil angedeuteten Richtung auf den fest an dem Maschinengehäuse 13 angeordneten ersten Gehäuseteil 5 geschoben, wobei die Schnapphaken 27 des ersten Gehäuseteils 5 über den Stützkragen 25 des zweiten Gehäuseteils 7 geschoben werden.

Figur 14 zeigt die beiden Gehäuseteile 5, 7 in einem ersten axialen Abstand voneinander, in dem sie aneinander noch nicht berühren.

Figur 15 zeigt die beiden Gehäuseteile 5, 7 in einem zweiten axialen Abstand voneinander, in dem die Schnapphakenenden 29 der Schnapphaken 27 an dem Stützkragen 25 anliegen.

Figur 16 zeigt die beiden Gehäuseteile 5, 7 in einem dritten axialen Abstand voneinander, in dem sich das elastische Verbindungselement 39 über den Schnapphakenenden 29 befindet.

Ein noch weiteres axiales Aufschieben des zweiten Gehäuseteils 7 auf den ersten Gehäuseteil 5 und erforderlichenfalls ein Drehen des zweiten Gehäuseteils 7 gegenüber dem ersten Gehäuseteil 5 resultiert schließlich in einer in Figur 12 gezeigten Verbindungsstellung der Gehäuseteile 5, 7.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gehäuse (3) für einen Messwertgeber oder eine elektrische Maschine (1), das Gehäuse (3) umfassend zwei Gehäuseteile (5, 7) mit jeweils einer ringförmig verlaufenden Anlageoberfläche (19, 21), wobei
- die Gehäuseteile (5, 7) relativ zueinander um eine Rotationsachse (17) drehbar gelagert sind,
- die Gehäuseteile (5, 7) und Anlageoberflächen (19, 21) derart ausgebildet sind, dass die Anlageoberflächen (19, 21) in mehreren durch relative Drehungen der Gehäuseteile (5, 7) einstellbaren Verbindungsstellungen der Gehäuseteile (5, 7) lückenlos aneinander anliegen,
- und wenigstens eines der beiden Gehäuseteile (5, 7) eine Gehäuseöffnung zur Durchführung wenigstens eines Abgangskabels (11) oder eine Steckerbuchse (23) für einen Stecker (9) eines Abgangskabels (11) aufweist.

2. Gehäuse (3) nach einem der vorhergehenden Ansprüche, **dadurch gekennzeichnet, dass** die Anlageoberflächen (19, 21) zueinander korrespondierende Höhenprofile aufweisen, die jeweils eine Rotationssymmetrie unter den Verbindungsstellungen der Gehäuseteile (5, 7) entsprechenden Rotationen um die Rotationsachse (17) aufweisen.

3. Gehäuse (3) nach Anspruch 2,
**dadurch gekennzeichnet, dass** das Höhenprofil jeder Anlageoberfläche (19, 21) wellenförmig und entlang des ringförmigen Verlaufs der Anlageoberfläche (19, 21) periodisch mit einer Periodenanzahl, die mit der Anzahl der verschiedenen Verbindungsstellungen der Gehäuseteile (5, 7) übereinstimmt, ausgebildet ist.

4. Gehäuse (3) nach einem der vorhergehenden Ansprüche, **gekennzeichnet durch** eine elastische Verbindung der beiden Gehäuseteile (5, 7), die einer Trennung der beiden Anlageoberflächen (19, 21) in jeder Verbindungsstellung der Gehäuseteile (5, 7) entgegenwirkt.

5. Gehäuse (3) nach Anspruch 4,
**dadurch gekennzeichnet, dass** jeder Gehäuseteil (5, 7) wenigstens eine Stützfläche (35, 37) aufweist, die in den Verbindungsstellungen der Gehäuseteile (5, 7) wenigstens annährend senkrecht zur Rotationsachse (17) ist und einer Stützfläche (35, 37) des jeweils anderen Gehäuseteils (5, 7) entlang einer Parallelen zur Rotationsachse (17) gegenüberliegt, und dass die elastische Verbindung in jeder Verbindungsstellung der Gehäuseteile (5, 7) eine einer Trennung der beiden Anlageoberflächen (19, 21) entgegenwirkende Kraft zwischen einer ersten Stützfläche (35, 37) eines Gehäuseteils (5, 7) und einer zweiten Stützfläche (35, 37) des anderen Gehäuseteils (5, 7) ausübt.

6. Gehäuse (3) nach Anspruch 5,
**dadurch gekennzeichnet, dass** die elastische Verbindung wenigstens ein elastisches Verbindungselement (39) aufweist, das derart angeordnet und ausgebildet ist, dass es in jeder Verbindungsstellung der Gehäuseteile (5, 7) zwischen einer ersten Stützfläche (35, 37) und einer zweiten Stützfläche (35, 37) angeordnet ist und einer Trennung der beiden Anlageoberflächen (19, 21) entgegenwirkt.

7. Gehäuse (3) nach Anspruch 6,
**gekennzeichnet durch** wenigstens ein als ein Federring ausgebildetes elastisches Verbindungselement (39).

8. Gehäuse (3) nach einem der Ansprüche 5 bis 7,
**dadurch gekennzeichnet, dass** ein Gehäuseteil (5, 7) einen um die Rotationsachse (17) verlaufenden Stützkragen (25) aufweist, dessen Oberfläche eine erste Stützfläche (35) definiert.

9. Gehäuse (3) nach Anspruch 8,
**dadurch gekennzeichnet, dass** der andere Gehäuseteil (5, 7) mehrere Schnapphaken (27) aufweist, die sich in jeder Verbindungsstellung der Gehäuseteile (5, 7) jeweils wenigstens annähernd parallel zur Rotationsachse (17) über den Stützkragen (25) erstrecken und jeweils ein Schnapphakenende (29) aufweisen, das eine der ersten Stützfläche (35) des Stützkragens (25) zugewandte zweite Stützfläche (37) aufweist, wobei jeder Schnapphaken (27) derart ausgebildet ist, dass das Schnapphakenende (29) über den Stützkragen (25) schiebbar ist.

10. Gehäuse (3) nach einem der vorhergehenden Ansprüche, **gekennzeichnet durch** eine Dichtung (41), die in jeder Verbindungsstellung der Gehäuseteile (5, 7) die Verbindung der beiden Gehäuseteile (5, 7) gegeneinander abdichtet.

11. Gehäuse (3) nach Anspruch 10,
**dadurch gekennzeichnet, dass** die Dichtung (41) wenigstens einen O-Ring umfasst, der in einer O-Ring-Nut (43) eines Gehäuseteils (5, 7) angeordnet ist, so dass er in jeder Verbindungsstellung der Gehäuseteile (5, 7) um die Rotationsachse (17) herum verläuft und an beiden Gehäuseteilen (5, 7) anliegt.

12. Elektrische Maschine (1) mit einem Gehäuse (3) gemäß einem der vorhergehenden Ansprüche, wobei ein erster Gehäuseteil (5, 7) des Gehäuses (3) räumlich fixiert ist und der zweite Gehäuseteil (5, 7) eine Gehäuseöffnung zur Durchführung wenigstens eines Abgangskabels (11) oder eine Steckerbuchse (23) für einen Stecker (9) eines Abgangskabels (11) aufweist.

13. Elektrische Maschine (1) nach Anspruch 12,
**dadurch gekennzeichnet, dass** das Gehäuse (3) ein Gehäuse eines Aktivteils der elektrischen Maschine (1) ist.

14. Elektrische Maschine (1) nach Anspruch 12,
**dadurch gekennzeichnet, dass** das Gehäuse (3) ein Gehäuse eines Messwertgebers ist und der erste Gehäuseteil (5, 7) fest an einem Maschinengehäuse (13) der elektrischen Maschine (1), insbesondere an einem Lagerschild des Maschinengehäuses (13), angeordnet ist.
